# EUROPÄISCHE PATENTSCHRIFT

(11) **EP 2 006 154 B1**
(45) Veröffentlichungstag und Bekanntmachung des Hinweises auf die Patenterteilung: **16.11.2016**
(21) Anmeldenummer: 08158680.2
(22) Anmeldetag: 20.06.2008
(51) Int. Cl.: B60Q 1/068, F21V 17/00

(54) **Scheinwerfer für Fahrzeuge**
Headlamp for vehicles
Phare pour véhicules

(30) Priorität: 23.06.2007 DE 102007028988
(43) Veröffentlichungstag der Anmeldung: 24.12.2008
(73) Patentinhaber: Hella KGaA Hueck & Co., 59552 Lippstadt (DE)
(72) Erfinder: Gröne, Stefan, 33034 Brakel (DE); Asrath, Jochen, 33106 Paderborn (DE); von Wuthenau, Alexander, 59597 Erwitte (DE)

(56) Entgegenhaltungen:
- EP-A- 0 084 073
- EP-A- 0 224 739
- EP-A- 0 464 690
- EP-A- 1 216 881
- EP-A- 1 437 545
- DE-A1- 10 309 087
- GB-A- 1 222 659
- US-A- 3 508 593

## Beschreibung

Die Erfindung betrifft einen Scheinwerfer für Fahrzeuge mit einem Gehäuse enthaltend zumindest eine Lichtquelle und einen Reflektor, mit einer Einstelleinrichtung zur Verstellung des Gehäuses um eine Schwenkachse in der Anbaulage des Scheinwerfers, wobei die Einstelleinrichtung eine Spindelschraube umfasst, die mit einem Kugelkopf in einer Pfannenaufnahme eines Tragrahmens axial fixiert gehaltert ist und die mit einem Gewindeabschnitt drehbar in einem mit dem Gehäuse verbundenen Aufnahmeteil gelagert ist.

Aus der DE 103 09 087 A1 ist ein Scheinwerfer für Fahrzeuge bekannt, der als ein Projektionsscheinwerfer ausgebildet ist mit einem Gehäuse, in dem eine Lichtquelle, ein Reflektor, eine Blende sowie eine Linse angeordnet sind. Der Scheinwerfer umfasst eine Einstelleinrichtung zur Verstellung des Gehäuses um eine Schwenkachse in der Anbaulage des Scheinwerfers. Die Einstelleinrichtung umfasst drei in Umfangsrichtung des Scheinwerfers verteilt angeordnete verstellbare Lager, die jeweils eine Spindelschraube umfassen, die zum einen mit einem Kugelkopf in einer Pfannenaufnahme eines Tragrahmens axial fixiert und zum anderen mit einem Gewindeabschnitt drehbar in einem mit dem Gehäuse verbundenen Aufnahmeteil gelagert ist. Das Aufnahmeteil ist als eine Spindelmutter ausgebildet, die über einen Bajonettverschluss mit einem einstückig mit dem Gehäuse verbundenen Befestigungsflansch verbunden ist. Nachteilig an dem bekannten Scheinwerfer ist, dass die Einstelleinrichtung mehrere Einzelteile aufweist, so dass eine Vielzahl von Fügeoperationen erforderlich ist.

Aus der EP 0 224 739 A1 ist ein Scheinwerfer für Fahrzeuge bekannt, bei dem ein fest mit einer Abdeckscheibe verbundenes Gehäuse um eine Schwenkachse schwenkbar zu einem Reflektor angeordnet ist. Es erfolgt somit zur Einstellung des Scheinwerfers ein teilweises Verschwenken desselben.

Aus der GB 1 222 659 A ist ein Scheinwerfer für Fahrzeuge bekannt, bei dem eine Linse, ein Reflektor und Gehäuse über eine Schnappverbindung miteinander befestigt sind. Eine Einstelleinrichtung zur Verstellung des Gehäuses um eine Schwenkachse ist nicht offenbart.

Aus der US 3 508 593 A ist ein Scheinwerfer für Fahrzeuge bekannt, der ein Einstelleinrichtung zur Verstellung eines Gehäuses zu einem Tragrahmen vorgesehen ist. Die Einstelleinrichtung umfasst eine Spindelschraube, die in einer Aufnahme des Gehäuses linearbeweglich gelagert ist.

Aufgabe der vorliegenden Erfindung ist es, einen Scheinwerfer für Fahrzeuge derart weiterzubilden, dass der Herstellungsaufwand für die Bereitstellung einer Einstelleinrichtung zur Verstellung eines Gehäuses des Scheinwerfers in der Anbaulage desselben verringert wird.

Zur Lösung dieser Aufgabe ist der erfindungsgemäße Scheinwerfer in Verbindung mit dem Oberbegriff des Patentanspruchs 1 dadurch gekennzeichnet, dass das Aufnahmeteil einstückig mit dem Gehäuse verbunden ist und dass das Aufnahmeteil von einem Befestigungsflansch des Reflektors umfangsseitig derart begrenzt ist, dass das Aufnahmeteil mit dem Befestigungsflansch formschlüssig und/oder kraftschlüssig verbunden ist.

Der besondere Vorteil der Erfindung besteht darin, dass der Herstellungsaufwand reduziert werden kann, dadurch, dass lediglich ein einstückig mit dem Gehäuse verbundenes Aufnahmeteil mit einem einstückig mit dem Reflektor verbundenen Befestigungsflansch in Verbindung gebracht ist, so dass eine axial verschiebliche Lagerung einer Spindelschraube gewährleistet ist. Zusätzliche Einzelteile am Gehäuse bzw. Reflektor sind daher nicht notwendig. Vorteilhaft ermöglichen die Geometrie des Aufnahmeteils und des Befestigungsflansches nicht nur die axiale Verstellbarkeit der Spindelschraube, sondern auch die Befestigung des Reflektors an dem Gehäuse. Somit kann auf weitere Befestigungsschrauben verzichtet werden.

Nach einer bevorzugten Ausführungsform der Erfindung ist das Aufnahmeteil einsteckbar in dem Befestigungsflansch des Reflektors ausgebildet, wobei eine Innenfläche des Befestigungsflansches eine Wandung des Aufnahmeteils aufnimmt. Vorteilhaft kann hierdurch über eine vorgegebene Tiefe eine formschlüssige Verbindung zwischen dem Aufnahmeteil und dem Befestigungsflansch gewährleistet sein.

Nach einer bevorzugten Ausführungsform der Erfindung ist eine Innenfläche des Aufnahmeteils derart ausgebildet, dass durch Eingreifen eines Gewindeabschnitts der Spindelschraube in die Öffnung des Aufnahmeteils bei der Erstmontage ein Gewinde in Innenfläche des Aufnahmeteils geschnitten wird. Vorteilhaft kann hierdurch die Geometrie des Aufnahmeteils einfach gestaltet sein. Ein erforderliches Gewinde wird erst durch den Gewindeabschnitt der Spindelschraube bei der Erstmontage eingebracht.

Nach einer Weiterbildung der Erfindung weist das Aufnahmeteil bei Erstmontage der Spindelschraube in Einsteckrichtung derselben einen sich verkleinernden Innendurchmesser auf, so dass nach Einsetzen der Spindelschraube sich die Wandung des Aufnahmeteils aufspreizt und gegen die Innenfläche des Befestigungsflansches gepresst wird. Es ergibt sich hierdurch eine sowohl kraft- als auch formschlüssige Verbindung zum Reflektor.

Ein Ausführungsbeispiel der Erfindung wird nachfolgend anhand der Zeichnungen näher erläutert.

Es zeigen:

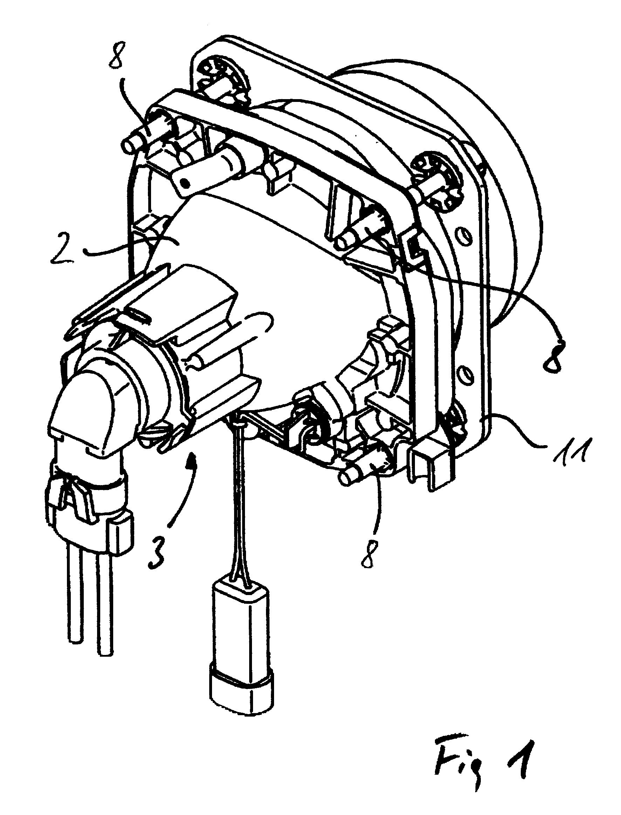

- Fig. 1: eine Rückansicht eines Scheinwerfers,

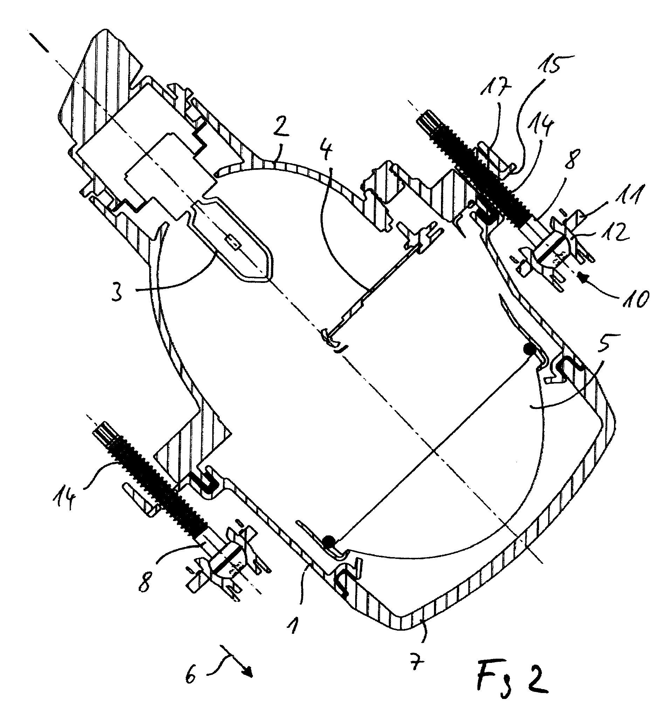

- Fig. 2: einen Vertikalschnitt durch den Scheinwerfer,
- Fig. 3: einen Längsschnitt durch ein Lager des Scheinwerfers unmittelbar vor Erstmontage einer Spindelschraube und
- Fig. 4: Einen Längsschnitt durch das Lager gemäß Figur 3 nach Erstmontage der Spindelschraube.

Ein Scheinwerfer für Fahrzeuge besteht aus einem Gehäuse 1 sowie einem Reflektor 2, in dessen Scheitelbereich eine Lichtquelle 3 angeordnet ist. Der Scheinwerfer ist als Projektionsscheinwerfer ausgebildet und weist eine Blende 4 sowie eine Linse 5 auf. In Lichtabstrahlrichtung 6 vor der Linse 5 ist eine transparente Abdeckscheibe 7 angeordnet, die fest mit dem Gehäuse 1 verbunden ist.

Der Scheinwerfer umfasst eine Einstelleinrichtung, wobei er in der Anbaulage an drei in Umfangsrichtung des Scheinwerfers verteilt angeordneten Lagerpunkten um eine Schwenkachse verschwenkbar gelagert ist. Die Einstelleinrichtung umfasst eine Spindelschraube 8, die mit einem Kugelkopf 9 in einer Pfannenaufnahme 10 eines Tragrahmens 11 axial fixiert gehaltert ist. Beispielsweise kann auf den Kugelkopf 9 eine Lagerschale 12 aufgeklippst sein, die dann rastend mit dem Tragrahmen 11 verbunden ist.

Die Spindelschraube 8 weist einen in Lichtabstrahlrichtung 6 hinten angeordneten Schaft 13 mit einem Gewindeabschnitt 14 auf, der drehbar in einem einstückig mit dem Gehäuse 1 verbundenen Aufnahmeteil 15 gelagert ist. Das Aufnahmeteil 15 ist derart ausgebildet, dass es innenseitig an einer Wandung 16 eines einstückig mit dem Reflektor 2 verbundenen Befestigungsflansches 17 formschlüssig und/oder kraftschlüssig verbunden ist. Diese feste Verbindung zwischen dem Aufnahmeteil 15 und dem Befestigungsflansch 17 wird durch den Eingriff des Gewindeabschnitts 14 in das Aufnahmeteil 15 aufrechterhalten, wobei das Aufnahmeteil 15 radial gegen die Wandung 16 des Befestigungsflansches 17 gepresst ist.

Das Aufnahmeteil 15 des Gehäuses 1 und der Befestigungsflansch 17 des Reflektors 2 sind jeweils im Querschnitt O-förmig ausgebildet. Das Aufnahmeteil 15 und der Befestigungsflansch 17 weisen jeweils auf einem in Lichtabstrahlrichtung 6 zugewandten Ende eine Stufe 18 auf, über die sie mit einem Hauptkörper des Gehäuses 1 bzw. des Reflektors 2 verbunden sind. Hierdurch ist gewährleistet, dass eine direkte Verbindung des Aufnahmeteils 15 mit dem Befestigungsflansch 17 nicht nur in dem Bereich der Öffnung besteht, sondern auch in einem an demselben angrenzenden Bereich.

Der Befestigungsflansch 17 ist, wie der Reflektor 2, aus einem Metallmaterial, vorzugsweise aus einem Aluminum-Druckgießmaterial hergestellt. Das Aufnahmeteil 15 ist - wie das Gehäuse 1 - aus einem Kunststoffmaterial hergestellt.

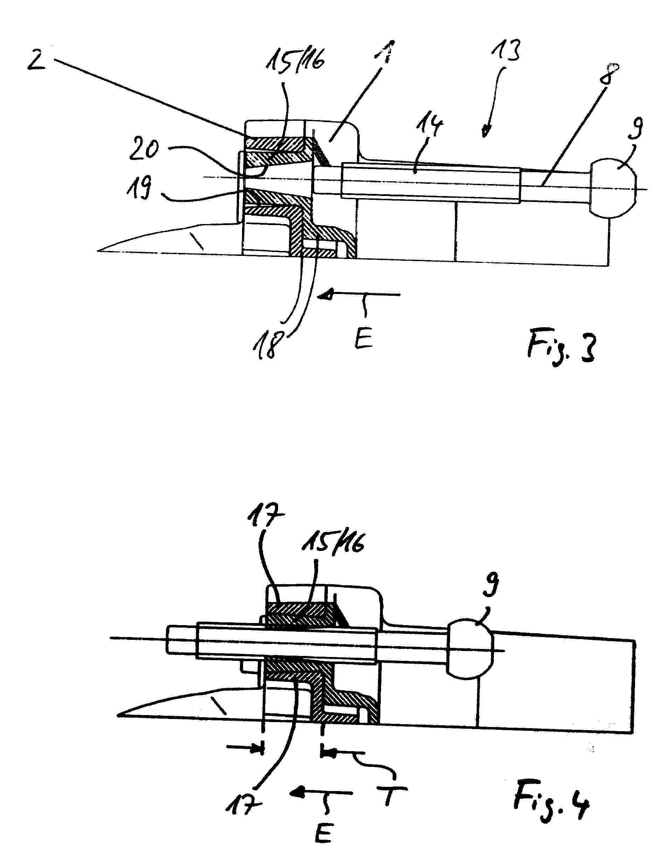

Zur Montage der Einstellvorrichtung sowie zur Befestigung des Reflektors 2 an dem Gehäuse 1 wird in einem ersten Schritt das Aufnahmeteil 15 des Gehäuses 1 in Einsteckrichtung E in die Öffnung des Befestigungsflansches 17 des Gehäuses 1 gesteckt, so dass das Gehäuse 1 vorfixiert am Reflektor 2 befestigt ist. Wie aus Figur 3 zu ersehen ist, weist das Aufnahmeteil 15 in Einsteckrichtung E zum einen einen sich verkleinernden Innendurchmesser und zum anderen eine sich in Einsteckrichtung E verdickende Wandung 16 auf. Die Wandung 16 des Aufnahmeteils 15 liegt an einer Innenfläche 19 des Befestigungsflansches 17 an, wobei der Befestigungsflansch 17 in Einsteckrichtung E verjüngend ausgebildet ist, dass heißt eine sich in Einsteckrichtung E verringernde Wandstärke aufweist.

Nachdem das Gehäuse 1 mit dem Reflektor 2 unter Einstecken des Aufnahmeteils 15 in den Befestigungsflansch 17 verbunden worden ist, erfolgt durch Eingreifen des

Gewindeabschnitts 14 der Spindelschraube 8 in die Öffnung des Aufnahmeteils 15 in Einsteckrichtung E eine form- und kraftschlüssige Verbindung zwischen dem Aufnahmeteil 15 des Gehäuses 1 und dem Befestigungsflansch 17 des Reflektors 2. Mit Eingreifen des Gewindeabschnitts 14 der Spindelschraube 8 in das Aufnahmeteil 15 wird ein Gewinde in eine Innenfläche 20 des Aufnahmeteils 15 geschnitten, so dass die Spindelschraube 8 drehbar in dem Aufnahmeteil 15 gelagert ist. Damit beim Eindrehen der Spindelschraube 8 ein Aufspreizen des Aufnahmeteils 15 ermöglicht wird, weist das Aufnahmeteil 15 mindestens zwei Axialschlitze, vorzugsweise vier Axialschlitze, auf, die sich vorzugsweise über die gesamte Tiefe T des Aufnahmeteils 15 erstrecken. Vorzugsweise sind die Axialschlitze in Umfangsrichtung des Aufnahmeteils 15 verteilt angeordnet und enden an einem der Stufe 18 zugewandten Bereich des Aufnahmeteils 15.

Das Aufnahmeteil 15 und der Befestigungsflansch 17 weisen vorzugsweise eine solche Tiefe T auf, dass der Gewindeabschnitt 14 der Spindelschraube 8 in Axialrichtung drehbar geführt ist. Vorzugsweise weisen das Aufnahmeteil 15 und der Befestigungsflansch 17 die gleiche Tiefe T auf. Durch vorheriges oder Nachfolgendes Einrasten des Kugelkopfes 9 in die Lagerschale 12 bzw. in die Pfannenaufnahme 10 des Tragrahmens 11 ist die Einstelleinrichtung montiert, so dass durch Verdrehen der Spindelschraube 8 eine Einstellung des Scheinwerfers erfolgen kann.

### Bezugszeichenliste

- 1: Gehäuse
- 2: Reflektor
- 3: Lichtquelle
- 4: Blende
- 5: Linse
- 6: Lichtabstrahlrichtung
- 7: Abdeckscheibe
- 8: Spindelschraube
- 9: Kugelkopf
- 10: Pfannenaufnahme
- 11: Tragrahmen
- 12: Lageschale
- 13: Schaft
- 14: Gewindeabschnitt
- 15: Aufnahmeteil
- 16: Wandung
- 17: Befestigungsflansch
- 18: Stufe
- 19: Innenfläche des Befestigungsflansches
- 20: Innenfläche des Aufnahmeteils
- E: Einsteckrichtung
- T: Tiefe

## Patentansprüche

1. Scheinwerfer für Fahrzeuge mit einem Gehäuse enthaltend zumindest eine Lichtquelle und einen Reflektor, mit einer Einstelleinrichtung zur Verstellung des Gehäuses um eine Schwenkachse in der Anbaulage des Scheinwerfers, wobei die Einstelleinrichtung eine Spindelschraube umfasst, die mit einem Kugelkopf in einer Pfannenaufnahme eines Tragrahmens axial fixiert gehaltert ist und die mit einem Gewindeabschnitt drehbar in einem mit dem Gehäuse verbundenen Aufnahmeteil gelagert ist, **dadurch gekennzeichnet, dass** das Aufnahmeteil (15) einstückig mit dem Gehäuse (1) verbunden ist und dass das Aufnahmeteil (15) von einem Befestigungsflansch (17) des Reflektors (2) umfangsseitig derart begrenzt ist, dass das Aufnahmeteil (15) mit dem Befestigungsflansch (17) formschlüssig und/oder kraftschlüssig verbunden ist.

2. Scheinwerfer nach Anspruch 1, **dadurch gekennzeichnet, dass** das Aufnahmeteil (15) einsteckbar in den Befestigungsflansch (17) des Reflektors (2) ausgebildet ist unter Anlage an einer Innenfläche (19) des Befestigungsflasches (17).

3. Scheinwerfer nach Anspruch 1 oder 2, **dadurch gekennzeichnet, dass** eine Innenfläche (20) des Aufnahmeteils (15) derart ausgebildet ist, dass durch Eingreifen des Gewindeabschnitts (14) der Spindelschraube (8) in die Öffnung des Aufnahmeteils (15) bei der Erstmontage ein Gewinde in die Innenfläche (20) des Aufnahmeteils (15) geschnitten wird.

4. Scheinwerfer nach einem der Ansprüche 1 bis 3, **dadurch gekennzeichnet, dass** die Einstelleinrichtung in Umfangsrichtung des Scheinwerfers verteilt angeordnete Aufnahmeteile (15) aufweist, die jeweils in einem Befestigungsflansch (17) des Gehäuses (1) gelagert sind zur axialen verschieblichen Aufnahme des Gewindeabschnitts (14) der Spindelschraube (8).

5. Scheinwerfer nach einem der Ansprüche 1 bis 4, **dadurch gekennzeichnet, dass** das Aufnahmeteil (15) und/oder der Befestigungsflansch (17) O-förmig ausgebildet ist.

6. Scheinwerfer nach einem der Ansprüche 1 bis 5, **dadurch gekennzeichnet, dass** das Aufnahmeteil (15) und der Befestigungsflansch (17) eine solche vorzugsweise gleiche Tiefe (T) aufweisen, dass der Gewindeabschnitt (14) der Spindelschraube (8) axial drehbar geführt ist.

7. Scheinwerfer nach einem der Ansprüche 1 bis 6, **dadurch gekennzeichnet, dass** das Aufnahmeteil (15) und der Befestigungsflansch (17) auf einem dem Kugelkopf (9) der Spindelschraube (8) zugewandten Ende über eine Stufe (18) mit einem Hauptkörper des Gehäuses (1) bzw. des Reflektors (2) verbunden sind.

8. Scheinwerfer nach einem der Ansprüche 1 bis 7, **dadurch gekennzeichnet, dass** das Aufnahmeteil (15) bei Erstmontage einen sich in Einsteckrichtung (E) der Spindelschraube (8) verkleinernden Innendurchmesser unter Bildung einer sich verdickenden Wandung (16) aufweist.

9. Scheinwerfer nach einem der Ansprüche 1 bis 8, **dadurch gekennzeichnet, dass** der Befestigungsflansch (17) bei Erstmontage der Spindelschraube (8) in Einsteckrichtung (E) derselben verjüngend ausgebildet ist.

10. Scheinwerfer nach einem der Ansprüche 1 bis 9, **dadurch gekennzeichnet, dass** das Aufnahmeteil (15) aus einem Kunststoffmaterial und dass der Befestigungsflansch (17) aus einem Metallmaterial hergestellt sind.

11. Scheinwerfer nach einem der Ansprüche 1 bis 10, **dadurch gekennzeichnet, dass** das Aufnahmeteil (15) mindestens zwei Axialschlitze aufweist, derart, dass sich beim Eindrehen der Spindelschraube (8) in das Aufnahmeteil (15) dasselbe aufspreizt.

## Claims

1. Headlamp for vehicles with a housing comprising at least a light source and a reflector, having an adjusting device for the adjustment of the housing around a swivel axis in the installed position of the headlamp, wherein the adjustment device comprises a spindle screw being held in an axially fixed manner with a ballhead in a socket seat of a carrier frame and being rotatably supported with a threaded section in a receiving part being connected with the housing,
**characterized in that**
the receiving part (15) is integrally formed to the housing (1) and that the receiving part (15) is limited in its circumference by a fastening flange (17) of the reflector (2) so that the receiving part (15) is connected to the fastening flange (17) in a form-locking and/or force-locking manner.

2. **Headlamp according to Claim 1, characterized in that** the receiving part (15) is embodied so that it can be inserted in the fastening flange (17) of the reflector (2) while having contact with an inner surface (19) of the fastening flange (17).

3. **Headlamp according to Claim 1 or 2, characterized in that** an inner surface (20) of the receiving part (15) is embodied so that during the initial assembly a thread is cut into the inner surface (20) of the receiving part (15) when the threaded section (14) of the spindle screw (8) engages in the opening of the receiving part (15).

4. **Headlamp according to one of the Claims 1 to 3, characterized in that** the adjustment device has receiving parts (15) arranged in a distributed manner over the circumference direction, which are each supported in a fastening flange (17) of the housing (1) for an axially slideable reception of the threaded section (14) of the spindle screw (8).

5. **Headlamp according to one of the Claims 1 to 4, characterized in that** the receiving part (15) and/ or the fastening flange (17) is embodied in an o-shaped manner.

6. **Headlamp according to one of the Claims 1 to 5, characterized in that** the receiving part (15) and the fastening flange (17) have such a preferably identical depth (T) that the threaded section (14) of the spindle screw (8) is guided in an axially rotatable manner.

7. **Headlamp according to one of the Claims 1 to 6, characterized in that** the receiving part (15) and the fastening flange (17) are connected via a step (18) to the main body of the housing (1) resp. the reflector (2) on an end facing the ball head (9) of the spindle screw (8).

8. **Headlamp according to one of the Claims 1 to 7, characterized in that** at the initial assembly, the receiving part (15) has an inner diameter which tapers in the insertion direction (E) of the spindle screw (8) while the wall thickness (16) increases.

9. **Headlamp according to one of the Claims 1 to 8, characterized in that** the fastening flange (17) is embodied in a tapering manner at the initial assembly of the spindle screw (8) in the insertion direction (E) of the same.

10. **Headlamp according to one of the Claims 1 to 9, characterized in that** the receiving part (15) is made from a plastic material and that the fastening flange (17) is made from a metal material.

11. **Headlamp according to one of the Claims 1 to 10, characterized in that** the receiving part (15) has at least two axial slots, so that during the screwing-in of the spindle screw (8) into the receiving part (15), the latter is widened.

## Revendications

1. Projecteur pour véhicules présentant un boîtier comprenant au moins une source lumineuse et un réflecteur, avec un dispositif de réglage pour le réglage du boîtier autour d'un axe de pivotement en position de montage du projecteur, le dispositif de réglage comprenant une broche filetée qui est fixée axialement par une tête sphérique dans un logement de coussinet d'un cadre porteur et qui est monté pivotante avec un segment fileté dans une pièce de logement reliée au boîtier, **caractérisé en ce que**
la pièce de logement (15) est reliée d'une seule pièce avec le boîtier (1) et que la pièce de logement (15) est périphériquement limitée par une bride de fixation (17) du réflecteur (2) de telle manière que la pièce de logement (15) soit reliée par la forme et/ou par la force à la bride de fixation (17).

2. Projecteur selon la revendication 1,
**caractérisé en ce que** la pièce de logement (15) est susceptible d'être enfichée dans la bride de fixation (17) du réflecteur (2), en appui sur une surface intérieure (19) de la bride de fixation (17).

3. Projecteur selon la revendication 1 ou 2,
**caractérisé en ce qu'**une surface intérieure (20) de la pièce de logement (15) est réalisée de telle manière que lors du premier montage un filetage soit fileté dans la surface intérieure (20) de la pièce de logement (15) par engrènement du segment fileté(14) de la broche filetée (8) sur l'ouverture de la pièce de logement (15).

4. Projecteur selon l'une des revendications 1 à 3,
**caractérisé en ce que** le dispositif de réglage présente des pièces de logement (15) réparties dans le sens périphérique du projecteur qui sont montées sur palier chaque fois dans une bride de fixation (17) du boîtier (1) pour le logement déplaçable axialement du segment fileté (14) de la broche filetée (8).

5. Projecteur selon l'une des revendications 1 à 4,
**caractérisé en ce que** la pièce de logement (15) et/ou la bride de fixation (17) sont réalisées en forme de O.

6. Projecteur selon l'une des revendications 1 à 5,
**caractérisé en ce que** la pièce de logement (15) et la bride de fixation (17) présentent de préférence une telle profondeur (T) pareille que le segment fileté (14) de la broche filetée (8) soit guidé à rotation axiale.

7. Projecteur selon l'une des revendications 1 à 6,
**caractérisé en ce que** la pièce de logement (15) et la bride de fixation (17) sont reliées sur un but orienté vers la tête sphérique (9) de la broche filetée (8) à travers un seuil (18) à un corps principal du boîtier (1) respectivement du réflecteur (2).

8. Projecteur selon l'une des revendications 1 à 7,
**caractérisé en ce que** lors du premier montage la pièce de logement (15) présente un diamètre intérieur se réduisant dans le sens d'enfichage (E) de la broche filetée (8) sous la formation d'une paroi s'épaississante (16).

9. Projecteur selon l'une des revendications 1 à 8,
**caractérisé en ce que** la bride de fixation (17) se rétrécit lors du premier montage de la broche filetée (8) dans le sens d'enfichage (E) de celle-ci.

10. Projecteur selon l'une des revendications 1 à 9,
**caractérisé en ce que** la pièce de logement (15) est fabriquée d'une matière plastique et que la bride de fixation (17) est fabriquée d'un matériau métallique.

11. Projecteur selon l'une des revendications 1 à 10,
**caractérisé en ce que** la pièce de logement (15) présente au moins deux fentes axiales de telle manière que lors du vissage de la broche filetée (8) sur la pièce de logement (15) celle-ci se déploie.
